# EUROPÄISCHE PATENTANMELDUNG

(11) **EP 4 660 527 A1**
(43) Veröffentlichungstag der Anmeldung: **10.12.2025**
(21) Anmeldenummer: 25180642.8
(22) Anmeldetag: 04.06.2025
(51) Int. Cl.: F23D 14/10, F23D 23/00

(54) **DOPPELKAMMERROHRBRENNER ZUM LÖSBAREN EINSETZEN IN PORTABLE GASGRILLS**

(30) Priorität: 04.06.2024 DE 202024102906 U
(71) Anmelder: Heilmann, Marc, 65462 Ginsheim-Gustavsburg (Rhineland Palatine) (DE)
(72) Erfinder: Heilmann, Marc, 65462 Ginsheim-Gustavsburg (Rhineland Palatine) (DE)
(74) Vertreter: Mackert, Andreas

(57) **Zusammenfassung**

Es soll ein Gasrohrbrenner für einen portablen Gasgrill geschaffen werden, um die volle Grillfläche mit gleichmäßiger Hitzeverteilung, besonders in den Randzonen, und gleichzeitig zwei regelbare Zonen zu nutzen.

Erreicht wird dies durch einen mobil einsetzbaren Doppelkammerrohrbrenner zum lösbaren Einsetzen in portablen Gasgrills, der ein Brennerrohr (2) umfasst, das zwei geteilte Gasgemisch-Kammern (17) und zwei Gasanschlüsse (16) zu diesen Gasgemisch-Kammern (17) aufweist.

## Beschreibung

Die Erfindung betrifft einen Gasrohrbrenner gemäß dem Oberbegriff des Anspruchs 1.

Derartige Gasrohrbrenner dienen der Erwärmung des Grillgutes bzw. dem Aufheizen eines Grillrost oder einer Grillplatte, welche zum Grillen verwendet wird. Solche Rohrbrenner sind entweder fest montiert oder montierbar in verschiedenen Ausführungen von Gas-Grills verbaut.

Solche Rohrbrenner weisen Löcher auf und sind teils mit verstellbaren Luftzufuhröffnungen versehen. Der Rohrbrenner im Stand der Technik hat an einer Seite einen Gasanschluss und die gegenüberliegende Seite ist zum Ende hin verschlossen. Der Flammaustritt lässt sich mittels eines Ventiles regulieren.

Aus der DE 10 2018 109 739 A1 ist ein solcher Gasrohrbrenner in einer Grillvorrichtung bekannt. Bei solchen Rohrbrennern ist nachteilig, dass das Gasluftgemisch mit der Länge des Rohrbrenners kontinuierlich abnimmt. Dies ist physikalisch bedingt, da der Volumenstrom (Druck) durch die steigende Anzahl der Löcher kontinuierlich abnimmt.

Diese bisherigen Rohrbrenner sind gerade für kleine Gasgrills, welche nur mit einem einzelnen Brenner zum Einsatz kommen, ungeeignet, da durch die Länge bedingt zum Ende hin immer ein Druckabfall vorhanden ist was eine kältere Flamme und somit eine kältere Zone auf dem Grillrost bewirkt, was gerade bei kleineren Grillflächen nachteilig ist. Doch gerade bei kleinen Grillflächen ist eine gleichmäßige Hitzeverteilung sinnvoll da der Platz sehr begrenzt ist.

Durch den Wärmeabfall zum Ende des Rohrbrenners hin, können meist nur 60 - 70% der Grillfläche effektiv mit hoher Hitze genutzt werden. Dies hat den Nachteil, dass ein Drittel der Grillfläche nicht heiß genug wird und somit das Grillgut nicht gleichmäßig erhitzt werden kann.

Ein Rohrbrenner lässt sich immer nur über ein Ventil über die gesamte Länge regeln, bei gemischtem Grillgut oder verschieden dicken Steaks wäre ebenso eine Zonensteuerung von Vorteil, so dass man die Temperatur dem Grillgut anpassen kann.

Der in Schutzanspruch 1 angegebenen Erfindung liegt die Aufgabe zu Grunde, einen Gasrohrbrenner für einen Grill zu konstruieren, welcher es ermöglicht, die volle Grillfläche mit gleichmäßiger Hitzeverteilung zu nutzen, besonders in den Randzonen, und gleichzeitig zwei regelbare Zonen ermöglicht.

Weiterhin sollen die Ausführungen der Erfindung erreichen, dass der Rohrbrenner schnell zu montieren und zu demontieren ist, um den Einsatz in Klappgrills zu ermöglichen.

Ebenso soll der Rohrbrenner eine Arretierung besitzen, um einen festgelegten Sitz zu gewährleisten und um ein Verrutschen zu verhindern.

Dieses Problem wird durch die in Schutzanspruch 1 aufgeführten Merkmale gelöst.

Die Unteransprüche haben vorteilhafte Ausführungsformen zum Gegenstand.

Der Rohrbrenner besteht aus einem länglichen Rohr, welches an beiden Seiten einen regelbaren Gasanschluss hat und in der Mitte innenliegend eine Trennwand besitzt. Dadurch kann das zugeführte Gas von beiden Enden des Rohrbrenners jeweils nur bis zur Trennwand in der Mitte hineinströmen, wobei auch neben zwei gleichgroßen Rohrabschnitten alternativ eine versetzte Trennwand zwei unterschiedlich lange Abschnitte bewirken kann.

Durch die bspw. Halbierte, sehr kurz gehaltene Form der zwei Gasgemisch-Kammern und dadurch, dass das jeweilige "Ende" sich in etwa mittig befindet, entsteht eine sehr gleichmäßige Hitzeverteilung. Durch die in etwa halbierte Länge der zwei Gasgemisch-Kammern ist der Druckabfall nicht in einem Maße feststellbar, wie dies bei längeren, nicht unterteilten Rohrbrennern der Fall ist.

Ebenso lässt sich bedingt durch die zwei endständigen, regelbaren Ventile die Grillfläche auch bei kleineren Grills mit nur einem erfindungsgemäßen Brennerrohr in zwei regelbare Zonen unterteilen. So lässt sich jede Hälfte für sich regeln, da man bei verschiedenem Grillgut auch verschiedene Temperaturen benötigt. Dies war bisher bei herkömmlichen Rohrbrennern so nicht möglich.

Das metallische Rohr ermöglicht eine Anbringung eines so genannten Nutensteines, welcher mittels Verschraubung montiert ist. Als vorteilhaftes Fixierungselement findet eine Zylinderkopfschraube Verwendung, deren zylindrischer Kopf gleichzeitig den Anschlag in Längsachse bildet. Der Nutenstein fixiert den Doppelkammerrohrbrenner gegen Verdrehen und Verrutschen, da der Nutenstein konisch gehalten ist und somit auf Anschlagposition klemmt.

Dadurch das die Gasanschlüsse mittels hitzebeständigem O-Ring fixiert werden, lassen sich diese ohne Werkzeug einfach herausziehen oder einsetzen, wodurch eine einfache schnelle Montage gewährleistet ist. Der Doppelkammerrohrbrenner wird von einer Seite hin in die vorgesehene Öffnung mit Aussparung für den Nutenstein in den Grill geschoben. Anschließend wird der zweite Gasanschluss eingesteckt. Der Brenner ist nun nach Anschluss eines Gasbehälters betriebsbereit.

Im Folgenden soll ein Ausführungsbeispiel der Erfindung anhand von Zeichnungen näher erläutert werden. Es zeigen
- Fig. 1: einen beispielhaften Klappgrill ohne Flammblech, mit Sicht auf den arretierten einsatzfähigen Doppelkammerrohrbrenner;
- Fig. 2: den einsatzfähigen Rohrbrenner in Draufsicht;
- Fig. 3: den Doppelkammerrohrbrenner im Schnitt dargestellt mit sichtbarer innenliegender mittig verlaufender Trennwand;
- Fig. 4: den Doppelkammerrohrbrenner in der Draufsicht mit beidseitig ausgesteckten Gasanschlüssen;
- Fig. 5: eine Ausschnittsvergrößerung der Kreuzbohrungen (14) des Doppelkammerrohrbrenners
- Fig. 6: einen Schnitt durch den Doppelkammerrohrbrenner 2 mit einer Anordnung zweier Fixierungselemente in Form von Zylinderschrauben 13 sowie
- Fig. 7: eine Seitenansicht des Doppelkammerrohrbrenners 2 mit zwei Fixierungselementen in Form von Zylinderschrauben 13, die an einer stirnseitigen Seitenwand 18 fixierend anliegen;
- Fig. 8: eine beispielhafte Aufnahme 22 zum Einsetzen des Doppelkammerrohrbrenners in die Seitenwände 18 mit Einrastaufnahme 23.

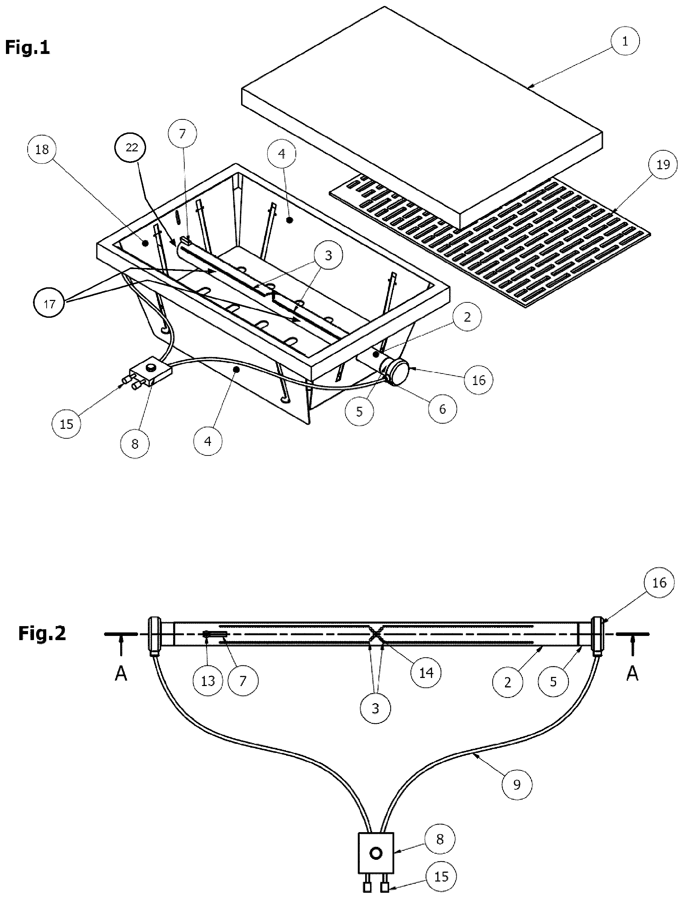

Figur 1 zeigt einen Klappgrill 4, 18, 19, 1 mit eingeschoben positioniertem Doppelkammerrohrbrenner 2 und angeschlossenem Doppelventil 8, welches durch die Durchflussregler 5 regelbar ist mit sichtbarem Nutensteinelement 7 und eingesteckten Gasanschlüssen 5,6,16. Das Nutensteinelement 7 fixiert den Rohrbrenner 2 und verhindert ein Verdrehen um dessen Längsachse. Die Gasaustrittsöffnungen 3 sind seitlich angebracht und werden so durch das Nutensteinelement 7 ebenfalls exakt ausgerichtet.

Die Fig.2 zeigt den einsatzfähigen Doppelkammerrohrbrenner 2 mit obenliegendem Nutenstein 7 und Anschlagelement 13 zur Positionierung in der Längsachse. Gasauslassöffnungen 3 und Kreuzbohrungen 14 sind seitlich sichtbar, wodurch die Flammen über Kreuz die diagonal gegenüberliegenden Seiten 3 entzünden. Die Regelung der zwei Gasgemisch-Kammern 17 erfolgt über das Doppelventil 8 mittels der Durchflussregler 15. Die zwei seitlichen Gas-Anschlussadapter 16, 5 sind eingesteckt und mit dem Gasschlauch 9 verbunden.

Es wird aus den Figuren 2 bis 4 deutlich, dass der Doppelkammerrohrbrenner ein Brennerrohr 2 umfasst, das zwei in sich geteilte Kammern 17 und zwei Gasanschlüsse 9, 6, 5, 16 mit jeweils regelbaren Gasanschlüssen 15, 8 aufweist. Auf diese Weise kann die Hitze deutlich konstanter gehalten werden über die Länge des Doppelkammerrohrbrenners oder in den beiden Kammern unterschiedlich geregelt werden.

Das Brennerrohr 2 des Doppelkammerrohrbrenners weist an seinen freien Enden Öffnungen zur Gaszufuhr mittels Gasadaptern 16 auf, wobei das Brennerrohr 2 durch eine mittig verlaufende Trennwand 12 in zwei gleich große Gasgemisch-Kammern 17 oder durch eine gegenüber der Mitte versetzt, verlaufende Trennwand 12 in zwei Gasgemisch-Kammern 17 unterschiedlicher Größe geteilt ist.

Um die Gasadapter 16 anschließen zu können ist vorgesehen, dass das Brennerrohr 2 des Doppelkammerrohrbrenners eine Länge aufweist, die größer ist als die Länge des portablen Gasgrills, in die der Doppelkammerrohrbrenners eingesetzt ist, wodurch das Brennerrohr 2 mit beiden Enden aus dem portablen Gasgrills herausragend ausgebildet ist. Der Doppelkammerrohrbrenner nach dieser Erfindung soll insbesondere in faltbaren mobilen Gasgrills zum Einsatz kommen, die zum Transport flach zusammengefaltet werden können. Dafür muss der Doppelkammerrohrbrenner vollständig aus dem Gehäuse des faltbaren mobilen Gasgrills entfernbar und nach dem Aufbau wieder einsetzbar sein.

Da hierfür auch der Gasanschluss immer aufs Neue getrennt und wieder hergestellt werden muss, müssen die beiden Enden des Doppelkammerrohrbrenners frei zugänglich seitlich aus dem faltbaren mobilen Gasgrill herausragen oder zumindest so weit zugänglich bleiben, dass die Gasadapter 16 beidseitig verbunden werden können.

Es ist für den Betrieb und die Entnahme des Doppelkammerrohrbrenners zudem relevant, dass das Brennerrohr 2 des Doppelkammerrohrbrenners an seinen beiden Enden mit Gasanschlüssen 5, 6, 16 verbunden ist, wobei zumindest einer der Gasanschlüssen 5, 6, 16 an einem freien Ende des Brennerrohrs 2 lösbar mit diesem verbunden ist. Auf diese Weise wird sichergestellt, dass der Doppelkammerrohrbrenner zumindest mit dem nun nach Abnahme des Gasadapters 16 wieder freien Ende durch das Gehäuse des Gasgrills geführt und aus diesem entnommen werden kann, um die Faltbarkeit wieder zu bewirken.

In einer vorteilhaften Bauform der Erfindung sind die Gasadapter 16 am Brennerrohr 2 des Doppelkammerrohrbrenners an seinen beiden Enden durch lösbare Steckverbindungen angeordnet, die hitzebeständigen O-Ringe 20 als Befestigungs- und Dichtungsmittel umfassen. Es ist somit erreicht, dass der Doppelkammerrohrbrenners vollständig von der Gaszufuhr abtrennbar ist, indem beide Adapter vom Brennerrohr 2 abgenommen werden. Es verbleibt somit lediglich das Brennerrohr 2 selbst getrennt von den Gasadaptern 16 und den Gasschläuchen 9, die in einem Doppelventil zusammengeführt sind.

Die O-Ringe 20 als Teil der Gasadapter 16 bewirken bei dieser Bauform zum einen die Steckverbindung zwischen Gasadapter 16 und den Aufnahmen zu den Gasgemisch-Kammern 17, da diese sich elastisch verformen und auf diese Weise gleichzeitig eine abdichtende Funktion erfüllen.

Die Gaszufuhr erfolgt in die zwei Gasgemisch-Kammern 17 über jeweils einen Gasschlauch 9, wobei die Gasschläuche 9 von einem Doppelventil 8 zum Gasbehälter oder zum Gasanschluss ausgehen und in je einem Gas-Anschluss 16, 5 zu den Gasgemisch-Kammern 17 enden. Die Gaszufuhr in die zwei Gasgemisch-Kammern 17 erfolgt über das Doppelventil 8 mittels jeweils einem der Gaszufuhr zugeordnetem Durchflussregler 15. Durch diese Konstruktion wird zum einen erreicht, dass die Verbindung zwischen dem Brennerrohr 2 und der Gaszufuhr vollständig abnehmbar ist und schnell durch das Einsetzen der Gasanschlussadapter (16) wieder herstellbar ist.

Die Gaszufuhr zum Doppelkammerrohrbrenner erfolgt daher über die Gasanschlussadapter 16, die einen Gasschlauch-Anschluss 6 zu den Gasschläuchen 9 aufweisen sowie ein Einschubelement 5 zum Eingriff in die endständigen Öffnungen der zwei Gasgemisch-Kammern 17, wobei das Einschubelement 5 über einen hitzebeständigen O-Ring 20 in diesen Öffnungen lösbar befestigt und abgedichtet ist, wobei der Gasaustritt über eine im Gasanschlussadapter 16 angeordnete Gasdüse 10 erfolgt. Diese Bauform ermöglicht auf vorteilhafte Weise das schnelle und unkompliziert werkzeugfreie Verbinden des Doppelkammerrohrbrenners mit bspw. einer mobilen Gaskartusche.

Um zu verhindern, dass der ins Grillgehäuse eingesetzte Doppelkammerrohrbrenner sich aus einer definierten Anwendungsposition verschiebt oder auch um seine Längsachse rotiert ist es in einer Bauform der Erfindung vorgesehen, dass der Doppelkammerrohrbrenner einen Querschnitt aufweist, der auf gegenüberliegende Aufnahmen im Gehäuse des mobilen Gasgrills angepasst ausgebildet ist zum Einschieben und zur lösbaren Anordnung im Gehäuse des mobilen Gasgrills.

Das heißt, die Aufnahmen im Gasgrill weisen beispielsweise einen vom kreisrunden Querschnitt abweichenden Querschnitt auf, beispielsweise einen ovalen Querschnitt, der korrespondiert mit dem Querschnitt des hierin aufzunehmenden Doppelkammerrohrbrenners, so dass dieser zum einen eingeschoben werden kann, zum anderen aber sichergestellt ist, dass über diese angepassten Querschnitte von Aufnahmen und Doppelkammerrohrbrenner der Doppelkammerrohrbrenner sich in den Aufnahmen nicht drehen kann.

Alternativ kann der Doppelkammerrohrbrenner gegen ein Verdrehen in den Aufnahmen im Gehäuse des mobilen Gasgrills neben der Formgebung des Querschnitts und der Aufnahmen durch am Doppelkammerrohrbrenner und den Aufnahmen ineinandergreifende Führungselemente gesichert sein. Hier kann beispielsweise eine Vorstehende Nut oder Zylinderkopfschraube auf dem Doppelkammerrohrbrenner in einer entsprechenden Aufnahme in der Aufnahme im Gehäuse des Gasgrills eingreifend geführt sein. Die ineinandergreifenden Führungselemente am Doppelkammerrohrbrenner und den Aufnahmen im Gehäuse sind als Nuten oder Zylinderkopfschrauben ausgebildet, die in Führungsaufnahmen eingreifen.

Zudem ist es zweckmäßig, dass der Doppelkammerrohrbrenner zumindest ein Anschlagelement 13 aufweist zur Sicherung gegen eine Längsverschiebung im Gehäuse des mobilen Gasgrills, welches am Gehäuse des mobilen Gasgrills anliegt. Das heißt neben der Frage der Ausrichtung des Doppelkammerrohrbrenners in Bezug auf dessen Gasdüsen, was die Rotation um dessen Längsachse anbetrifft, ist auch eine Längsverschiebung im Gehäuse des Gasgrills zu vermeiden.

Alternative Lösungen zur Fixierung im Gehäuse des Gasgrills sind, dass zur lösbaren Fixierung des Doppelkammerrohrbrenners im Gehäuse des mobilen Gasgrills ein Nutenstein auf dem Doppelkammerrohrbrenner angeordnet ist, der konisch ausgebildet ist und in eine Aufnahme im Gehäuse des mobilen Gasgrills in einer Anschlagposition eine Klemmverbindung erzeugend gegen ein Verdrehen und Verrutschen des Doppelkammerrohrbrenners im Gehäuse des mobilen Gasgrills eingreift. Das heißt beim Einschieben des Doppelkammerrohrbrenners wird dieser sowohl in Bezug auf dessen Ausrichtung der Gasdüsen nach oben als auch in dessen Fixierung der Längsachsenverschiebung festgelegt.

Auch zumindest eine Zylinderkopfschraube 13 als Fixierungselement auf dem Doppelkammerrohrbrenner kann alternativ angeordnet werden, deren zylindrischer Kopf gleichzeitig einen Anschlag in Längsachse bildet. Zudem kann ein klammer ähnlichen, U-förmigen Steckelement als Fixierungselement auf dem Doppelkammerrohrbrenner angeordnet werden und diesen am Gehäuse des Gasgrills lösbar befestigen. Dies ist ein separates lösbares Bauteil.

Ein weiterer erfinderischer Gedanke hierbei ist das Einrasten zumindest einer Zylinderkopfschraube 13 oder eines analog wirkenden vorstehenden Fixierungselementes angeordnet auf dem Brennerrohr 2 des Doppelkammerrohrbrenners durch eine rotatorische Bewegung des in die seitlichen Aufnahmen der Seitenwände 18 eingeführten Doppelkammerrohrbrenners. Es sind hierfür alternative Anordnungen Gegenstand der Offenbarung, wobei wesentlich ist, dass zwischen zumindest zwei dieser Fixierungselemente durch die Rotation des Doppelkammerrohrbrenners und das Abgleiten dieser Fixierungselemente an den Seitenwänden 18 eine Vorspannung aufgebaut wird, die durch das Einrasten zumindest eines dieser Fixierungselemente zumindest teilweise entlastet wird und so die Fixierung des Doppelkammerrohrbrenners in einer Anwendungsposition bewirkt.

Dies kann durch unterschiedliche Anordnungen dieser Fixierungselemente sowie der mit diesen zusammenwirkenden Einrastaufnahmen erfolgen, beispielsweise durch zwei innenliegende Fixierungselemente, die nach unten gedreht an die schräg verlaufenden Seitenwände 18 angedrückt werden und einseitig oder beidseitig ein- oder beidseitig in Einrastaufnahmen eingreifen, oder umgekehrt beide außenliegend an den Seitenwänden 18 nach oben gedreht ein- oder beidseitig in oberhalb liegenden Einrastaufnahmen einrasten. Des Weiteren ist eine Anordnung zweckmäßig, bei der die Fixierungselemente zum einen außerhalb und zum anderen innerhalb einer Seitenwand 18 oder beider Seitenwände 18 anliegen und bei der Rotation eine Vorspannung aufbauen.

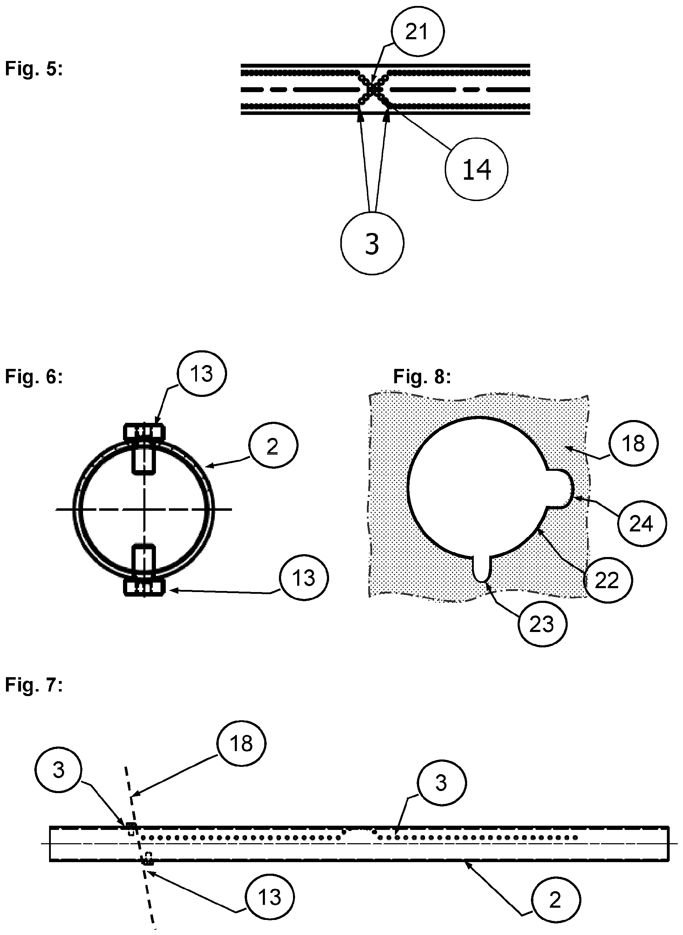

Es hat sich als besonders vorteilhaft gezeigt, wenn zwei Zylinderkopfschrauben 13 an einer Seitenwand 18 des Doppelkammerrohrbrenners oben und unten mit einem Abstand von knapp 10 mm abhängig vom Durchmesser des Brennerrohrs 2 angeordnet sind, wie dies in den Figuren 6 bis 8 dargestellt ist. Wenn der Doppelkammerrohrbrenner soweit in die im Gehäuse seitlich angeordneten Aufnahmen 22 eingeschoben ist, bis die erste Zylinderkopfschraube 13 durch eine entsprechend geformte Aussparung 24 in zumindest einer Aufnahme 22 in der Seitenwand 18 des Grills eingeführt ist, dreht man das Brennerrohr 2 des Doppelkammerrohrbrenners mit der nun innenliegend eingeschobenen Zylinderkopfschraube 13 so weit nach unten bis diese in eine versetzt nutförmigen Einrastaufnahme 23 im Blech der Seitenwand 18 einrastet, wobei diese Nut kleiner bzw. schmaler als die Zylinderkopfschraube 13 ausgebildet ist, die daher in dieser Nut gehalten wird.

Die außerhalb der Aufnahme 22 verbliebene zweite Zylinderkopfschraube 13 liegt aufgrund der Drehung des Doppelkammerrohrbrenners nun am Blech der Außenseite dieser Seitenwand 18 an. Durch die gegenüber der Vertikalen schräge Anordnung der Seitenwand herrscht nun durch die Drehbewegung und den definierten Abstand der zwei Zylinderkopfschrauben 13 zueinander eine definierte Vorspannung, die den Doppelkammerrohrbrenner durch das Einrasten der ersten Zylinderkopfschraube 13 fixiert.

Diese Aufnahme 22 mit der seitlichen Aussparung zum Einrasten 23 sowie eine entsprechend geformte Aussparung 24 zum Einführen der ersten Zylinderkopfschraube in die Seitenwand 18, befindet sich vorteilhafterweise an beiden Seitenwänden 18. Somit kann man den Doppelkammerrohrbrenners jetzt von jeder Seite einführen und verspannen und muss beim Aufbau nicht darauf achten.

Die Positionierung der Fixierungselemente auf dem Doppelkammerrohrbrenner wird hierbei auf eine definiert angestrebte Vorspannung hin ausgelegt, die durch die Rotation an den schräg verlaufenden Seitenteilen angestrebt wird. Die zu berücksichtigenden Parameter sind hierbei zum einen die Handhabbarkeit, das heißt die erforderliche Kraft, die für das Einrasten durch die Drehbewegung aufzubringen ist.

Dies wird zudem abgestimmt auf die in die Bleche der Seitenteile eingebrachte Vorspannung mit Blick auf eine nicht beabsichtigte Verformung dieser Bleche beim Einrastvorgang, andererseits aber auf den sicheren Einrastvorgang selbst, für den diese Vorspannung relevant ist.

Schließlich ist ein wesentlicher berücksichtigter Aspekt die durch die Hitze beim Betrieb des Gasgrills entstehende Verformung des Grills und dessen Seitenteilen, die eine Auswirkung auf diese Vorspannung und somit das sichere Einrasten und Fixieren des Doppelkammerrohrbrenners haben. Hier ist zu berücksichtigen, dass weder diese in die Seitenteile eingebrachte Vorspannung sich problematisch beispielsweise deformierend erhöhen darf noch so weit reduziert werden soll, dass die fixierende Einrastung aufgehoben wird und der Doppelkammerrohrbrenner sich aus seiner Anwendungsposition herausbewegen kann. Gleichzeitig ist die erfindungsgemäße Fixierung durch Einrastung des Doppelkammerrohrbrenners im Gehäuse gerade auch mit Blick auf die beim Betrieb entstehende Hitze von Bedeutung, was den sicheren Betrieb anbetrifft, da das Brennerrohr 2 hierfür in einer definierten Position sicher gehalten werden sollte.

Was die Gasführung anbetrifft, ist in einer vorteilhaften Bauform vorgesehen, dass Gasauslassöffnungen 3 und Kreuzbohrungen 14 seitlich am Doppelkammerrohrbrenner verlaufend angeordnet sind, wodurch die Flammen über Kreuz die diagonal gegenüberliegenden Seiten 3 entzünden.

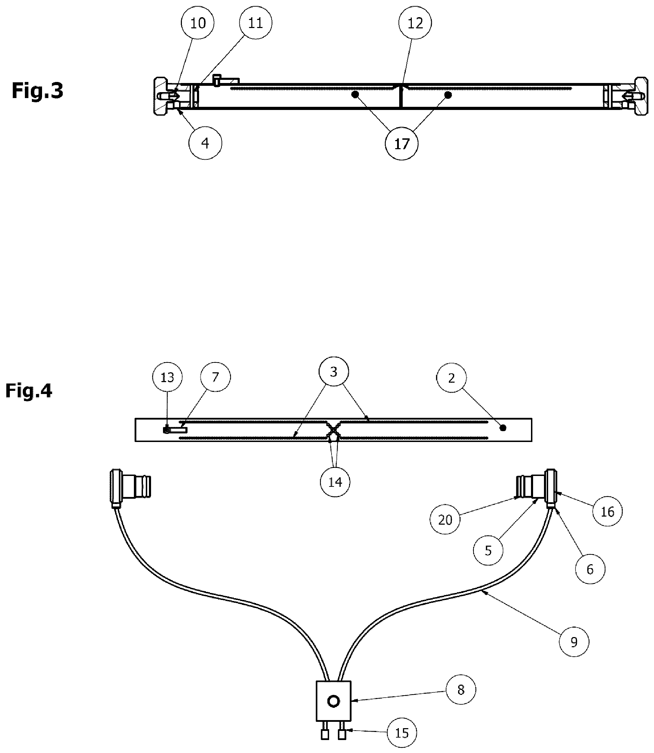

In Fig.3 ist der Doppelkammerrohrbrenner 2 im Schnitt mit Gasdüse 10, Luftzufuhröffnung 4 und O-Ring Nut 11 als Fixierhilfe, linker und rechter Gasgemisch-Kammer 17 und in dieser Bauform mittig verlaufender Trennwand 12 dargestellt.

In Fig.4 ist der Doppelkammerrohrbrenner mit angesteckten Gasanschlüssen 5, 6, 16 und hitzebeständigen O-Ringen 20, dem Doppelventil 8 mit Reglern 15 und angeschlossenem Gasschlauch 9 dargestellt.

Figur 5 zeigt in einer vergrößerten Ausschnittsdarstellung aus Figur 4 die Kreuzbohrungen 14. Die Kreuzbohrungen 14 bewirken vorteilhafterweise, dass die vordere Reihe der Gasaustrittsöffnungen 3 der ersten Gasgemisch-Kammer 17 des Rohrbrenners nach der Gaszufuhr nur an einem Punkt an einer Seite entzündet wird und sich über die Kreuzbohrungen 14 fortpflanzt erst diagonal zur Mitte hin und dann von dort wieder diagonal zur hinteren Reihe der Gasaustrittsöffnungen 3. So wandert die Gasflamme über die Kreuzbohrungen 14 von der vorderen zur hinteren Bohrungsreihe der Gasaustrittsöffnungen 3 des Doppelkammerrohrbrenners.

Auch die weiteren gespiegelten zwei Reihen der Gasaustrittsöffnungen 3 der zweiten Gasgemisch-Kammer 17 des Doppelkammerrohrbrenners werden durch diese Lösung automatisch gezündet, da sich über die mittleren oben und gegenüberliegenden Kreuzbohrungs-Gasaustrittsöffnungen 21 der Kreuzbohrungen 14 sich auch die anderen zwei Reihen der Gasaustrittsöffnungen 3 entzünden, die gespiegelt dazu verlaufen.

Da die Kreuzbohrungen 14 der beiden Gasgemisch-Kammern 17 in etwa v-förmig verlaufen und hierbei die oben- und gegenüberliegenden mittleren Kreuzbohrungs-Gasaustrittsöffnungen 21 nur einen geringen Abstand zueinander aufweisen, der bestimmt ist durch die Dicke der zwischen diesen verlaufenden Trennwand 12, springt die Gasflamme nach der punktuellen Zündung in einer der Gasgemisch-Kammern 17 an diesem Punkt auf die gegenüberliegende, gespiegelte Kreuzbohrung 14 über und pflanzt sich von dort ausgehend in den zwei Reihen der Gasaustrittsöffnungen 3 der zweiten Gasgemisch-Kammer 17 fort. Somit genügt die Entzündung an nur einem Punkt einer der Gasgemisch-Kammern 17, um alle Gasaustrittsöffnungen 3 des Doppelkammerrohrbrenners zu zünden.

Eine Zündung der zweiten Gasgemisch-Kammer 17 ohne diese konstruktive Lösung wird zeitlich versetzt ggf. durch eine Verpuffung erfolgen, wenn aus der zweiten Kammer genug Gas ausgetreten ist, um sich selbst an der ersten der Gasgemisch-Kammern 17 zu entzünden, was aber unkontrolliert und je nach Außeneinflüssen wie beispielsweise Wind nicht sicher erfolgt.

Die Alternative die Flammreihen beider Gasgemisch-Kammern 17 an beiden Seiten nacheinander zu entzünden, birgt zudem die Gefahr, dass die angesprochene Verpuffung während des zweiten Anzündens selbsttätig eintritt und der Anwender sich so beim Versuch der manuellen Entzündung verletzt. Die Kreuzbohrungen 14 erhöhen somit zum einen die Benutzerfreundlichkeit, zum anderen aber auch die Sicherheit des Doppelkammerrohrbrenners.

### Bezugszeichenliste

(1) Deckel
(2) Brennerrohr
(3) Gasaustrittsöffnungen
(4) Luftzufuhrbohrung
(5) Zylindrisches Einschubelement
(6) Gasschlauch Anschluss
(7) Nutenstein
(8) Doppelventil
(9) Gasschlauch
(10) Gasdüse
(11) O-Ring Nut
(12) Trennwand
(13) Zylinderkopfschraube
(14) Kreuzbohrung für Flammübertragung
(15) Durchflussregler
(16) Gasanschlussadapter
(17) Gasgemisch Kammern
(18) Stirnseitige Seitenwand
(19) Grillrost
(20) Hitzebeständiger O-Ring
(21) Kreuzbohrungs-Gasaustrittsöffnungen
(22) Aufnahme in der Seitenwand
(23) Einrastaufnahme
(24) Aussparung

## Patentansprüche

1. Mobil einsetzbarer Doppelkammerrohrbrenner zum lösbaren Einsetzen in portablen Gasgrills, **gekennzeichnet durch** ein den Doppelkammerrohrbrenner bildendes Brennerrohr (2), das zwei geteilte Gasgemisch-Kammern (17) und zwei Gasanschlüsse (16) zu diesen Gasgemisch-Kammern (17) aufweist.

2. Mobil einsetzbarer Doppelkammerrohrbrenner nach einem der vorangegangenen Anspruch 1,
**dadurch gekennzeichnet, dass**
- das Brennerrohr (2) des Doppelkammerrohrbrenners an seinen freien Enden Öffnungen zur Gaszufuhr mittels Gasanschlüssen (5, 6, 16) aufweist,
- wobei das Brennerrohr (2) durch eine mittig verlaufende Trennwand (12) in zwei gleich große Gasgemisch-Kammern (17) oder durch eine gegenüber der Mitte versetzt verlaufende Trennwand (12) in zwei Gasgemisch-Kammern (17) unterschiedlicher Größe geteilt ist.

3. Mobil einsetzbarer Doppelkammerrohrbrenner nach einem der vorangegangenen Ansprüche,
**dadurch gekennzeichnet, dass**
- das Brennerrohr (2) des Doppelkammerrohrbrenners eine Länge aufweist, die größer ist als die Länge des portablen Gasgrills, in die der Doppelkammerrohrbrenners eingesetzt ist,
- wodurch das Brennerrohr mit beiden Enden aus dem portablen Gasgrills herausragend und/oder für Gasanschlüsse (5, 6, 16) zugänglich ausgebildet ist.

4. Mobil einsetzbarer Doppelkammerrohrbrenner nach Anspruch 1,
**dadurch gekennzeichnet, dass**
- das Brennerrohr (2) des Doppelkammerrohrbrenners im Betrieb an seinen beiden Enden mit Gasanschlüssen (5, 6, 16) verbunden ist,
- wobei zumindest einer der Gasanschlüssen (5, 6, 16) an einem freien Ende des Brennerrohrs (2) lösbar mit diesem verbunden ist.

5. Mobil einsetzbarer Doppelkammerrohrbrenner nach Anspruch 2,
**dadurch gekennzeichnet, dass**
- die Gasanschlüsse (5, 6, 16) am Brennerrohr (2) des Doppelkammerrohrbrenners an seinen beiden Enden durch lösbare Steckverbindungen angeordnet sind,
- die hitzebeständige O-Ringe (20) als Befestigungs- und Dichtungsmittel umfassen.

6. Mobil einsetzbarer Doppelkammerrohrbrenner nach einem der vorangegangenen Ansprüche,
**dadurch gekennzeichnet, dass**
- der Doppelkammerrohrbrenner einen Querschnitt aufweist, der auf sich gegenüberliegende Aufnahmen (22) im Gehäuse des mobilen Gasgrills angepasst ausgebildet ist zum Einschieben und zur lösbaren Anordnung im Gehäuse des mobilen Gasgrills, wobei
- der Doppelkammerrohrbrenner gegen ein Verdrehen in den Aufnahmen (22) im Gehäuse des mobilen Gasgrills durch die Formgebung des Querschnitts des Brennerrohrs (2) und der Aufnahmen (22) und/oder durch am Doppelkammerrohrbrenner und den Aufnahmen ineinandergreifende Führungs- und/oder Fixierungselemente gesichert ist.

7. Mobil einsetzbarer Doppelkammerrohrbrenner nach Anspruch 6,
**dadurch gekennzeichnet, dass**
die ineinandergreifenden Führungselemente am Doppelkammerrohrbrenner und den Aufnahmen im Gehäuse als Nuten ausgebildet sind, die in Führungsaufnahmen eingreifen.

8. Mobil einsetzbarer Doppelkammerrohrbrenner nach einem der vorangegangenen Ansprüche,
**dadurch gekennzeichnet, dass**
der Doppelkammerrohrbrenner zumindest ein Anschlagelement (13) aufweist zur Sicherung gegen eine Längsverschiebung im Gehäuse des mobilen Gasgrills, welches am Gehäuse des mobilen Gasgrills anliegt.

9. Mobil einsetzbarer Doppelkammerrohrbrenner nach einem der vorangegangenen Ansprüche,
**dadurch gekennzeichnet, dass**
Gasaustrittsöffnungen (3) in Reihen beidseitig seitlich und als Kreuzbohrungen (14) den Doppelkammerrohrbrenner v-förmig überspannend angeordnet sind, wodurch die Gasflammen über die Kreuzbohrungen (14) die gegenüberliegenden Reihen von (3) Gasaustrittsöffnungen entzünden.

10. Mobil einsetzbarer Doppelkammerrohrbrenner nach einem der vorangegangenen Ansprüche,
**dadurch gekennzeichnet, dass**
zur Übertragung der Gaszündung von einer Gasgemisch-Kammer (17) auf die zweite Gasgemisch-Kammer (17) oberseitig nah beieinander und gegenüberliegende mittlere Kreuzbohrungs-Gasaustrittsöffnungen (21) angeordnet sind, um eine Fortpflanzung der Gaszündung trotz der die Kammern (17) trennender Trennwand (12) zu bewirken.

11. Mobil einsetzbarer Doppelkammerrohrbrenner nach einem der vorangegangenen Ansprüche,
**dadurch gekennzeichnet, dass**
die Gaszufuhr in die zwei Gasgemisch-Kammern (17) über jeweils einen Gasschlauch (9) erfolgt, wobei die Gasschläuche (9) von einem Doppelventil (8) zum Gasbehälter oder zum Gasanschluss ausgehen und in je einem Gas-Anschluss (16, 5) zu den Gasgemisch-Kammern (17) enden.

12. Mobil einsetzbarer Doppelkammerrohrbrenner nach einem der vorangegangenen Ansprüche,
**dadurch gekennzeichnet, dass**
die Gaszufuhr in die zwei Gasgemisch-Kammern (17) über das Doppelventil (8) mittels jeweils einen der Gaszufuhr zugeordneten Durchflussregler (15) erfolgt.

13. Mobil einsetzbarer Doppelkammerrohrbrenner nach einem der vorangegangenen Ansprüche,
**dadurch gekennzeichnet, dass**
die Gaszufuhr zum Doppelkammerrohrbrenner erfolgt über Gasanschlussadapter (16), die einen Gasschlauch-Anschluss (6) zu den Gasschläuchen (9) aufweisen sowie ein Einschubelement (5) zum Eingriff in die endständigen Öffnungen der zwei Gasgemisch-Kammern (17), welches über einen hitzebeständigen O-Ring (20) in diesen Öffnungen lösbar befestigt und abgedichtet ist, wobei der Gasaustritt über eine im Gasanschlussadapter (16) angeordnete Gasdüse (10) erfolgt.

14. Mobil einsetzbarer Doppelkammerrohrbrenner nach einem der vorangegangenen Ansprüche,
**dadurch gekennzeichnet, dass**
zur lösbaren Fixierung des Doppelkammerrohrbrenners im Gehäuse des mobilen Gasgrills ein Nutenstein auf dem Doppelkammerrohrbrenner angeordnet ist, der konisch ausgebildet ist und in eine Aufnahme im Gehäuse des mobilen Gasgrills in einer Anschlagposition eine Klemmverbindung erzeugend gegen ein Verdrehen und Verrutschen des Doppelkammerrohrbrenners im Gehäuse des mobilen Gasgrills eingreift.

15. Mobil einsetzbarer Doppelkammerrohrbrenner nach einem der vorangegangenen Ansprüche,
**dadurch gekennzeichnet, dass**
zumindest ein Fixierungselement in Form einer Zylinderkopfschraube oder einem anderen aufgesetzten Körper auf dem Doppelkammerrohrbrenner angeordnet ist, deren Kopf gleichzeitig einen Anschlag in Längsachse bildet
oder ein klammerähnlichen, U-förmigen Steckelement als Fixierungselement auf dem Doppelkammerrohrbrenner angeordnet ist und diesen am Gehäuse des Gasgrills lösbar befestigt.

16. Mobil einsetzbarer Doppelkammerrohrbrenner nach Anspruch 15,
**dadurch gekennzeichnet, dass**
- zumindest zwei Fixierungselemente an einer oder beiden in den schräg verlaufenden Seitenwänden (18) geführten Enden des Doppelkammerrohrbrenners mit einem Abstand zueinander versetzt oder sich gegenüberliegend angeordnet sind,
- die beim Einsetzen der Doppelkammerrohrbrenner in seitlichen Aufnahmen (22) in den Seitenwänden (18) durch eine rotatorische Bewegung des Brennerrohrs (2) durch einen definierten Abstand der Fixierungselemente zueinander unter Erzeugung einer ansteigenden Vorspannung an den Seitenwänden anliegen,
- wobei zumindest eines der Fixierungselemente beim Erreichen einer Anwendungsposition in eine Einrastaufnahme (23) im Blech zumindest einer Seitenwand (18) einrastend ausgebildet ist
- und diese Einrastaufnahmen (23) in einer der beiden oder in beiden Seitenwänden (18) angeordnet sind.
